Europäisches Patentamt

European Patent Office

Office européen des brevets

(19)

(11) Veröffentlichungsnummer: **0 025 146**

**A1**

(12) **EUROPÄISCHE PATENTANMELDUNG**

(21) Anmeldenummer: 80104922.2

(22) Anmeldetag: 19.08.80

(51) Int. Cl.³: **B 23 K 35/36**
**B 23 K 9/18**

(30) Priorität: 08.09.79 DE 2936364

(43) Veröffentlichungstag der Anmeldung:
18.03.81 Patentblatt 81/11

(84) Benannte Vertragsstaaten:
AT BE CH FR GB IT LI NL

(71) Anmelder: MESSER GRIESHEIM GMBH
Patentabteilung Hanauer Landstrasse 330
D-6000 Frankfurt/Main(DE)

(72) Erfinder: Dilthey, Ulrich, Dr.
Kleistrasse 2
D-8057 Eching(DE)

(72) Erfinder: Eichhorn, Friedrich, Prof. Dr.
Fichthang 2
D-5100 Aachen(DE)

(72) Erfinder: Hirsch, Peter, Dr.
22491 Chester
Farmington Hills Michigan 48024(US)

(72) Erfinder: Holbach, Peter
Herzogstrasse 8
D-5100 Aachen(DE)

(72) Erfinder: Lettner, Kurt
Bezirksstrasse 24
D-8044 Unterschleissheim(DE)

(54) Verfahren zum Unterpulverschweissen von Leichtmetallen, wie Aluminium und Aluminium-Legierungen, sowie dabei verwendetes Schweisspulver.

(57) Ein Schweißverfahren zum Verbinden von Aluminiumwerkstoffen in horizontaler Schweißposition, ohne Vorwärmung, mit hoher Wirtschaftlichkeit und geringer Umweltbelastung sowie guter Festigkeit und Zähigkeit der Schweiß-verbindung, bei dem der Lichtbogen - wie beim Unterpulverschweißen von Stahlblechen - verdeckt von einer Pulverschicht in einer geschlossenen Kaverne brennt, wird durch Verwendung eines Schweißpulvers erreicht, welches eine Pulverzusammensetzung von 20-70 % Kaliumchlorid (KCl), 20-70 % eines Erdalkalichlorids, vorzugsweise Calcium-und/oder Magnesiumchlorid ($CaCl_2$ und/oder $MgCl_2$), 1-20 % Calciumfluorid ($CaF_2$) und vorzugsweise 1-15 % einer schmelzpunkternierdrigenden und/oder gasabspaltenden Substanz hat.

FIG.1

BEZEICHNUNG GEÄNDERT
siehe Titelseite

- 1 -

MESSER GRIESHEIM GMBH                    MG 1196

Kennwort: UP-Pulver / Al Mg 4,5 Mn       EM  940

Ordner: XVI

## Verfahren zum Unterpulverschweißen von Leichtmetallen wie Aluminium und Aluminium-Legierungen

Die Erfindung bezieht sich auf ein Schweißen von Leichtmetallen, wie Aluminium und Aluminium-Legierungen.

Zum Verbinden von Aluminiumwerkstoffen in horizontaler Position wird zur Zeit fast ausschließlich das Schutzgasschweißverfahren eingesetzt. Dieses erfordert bei konventioneller Arbeitsweise eine Vorwärmung der zu verbindenden Bleche und eine Vielzahl von einzubringenden Lagen bzw. bei Anwendung der Hochstrom- oder Dickdrahttechnik eine komplizierte Schweißkopfausführung zur Aufrechterhaltung des Gasschutzes bei den hohen Stromstärken.

Beide Verfahrensvarianten bewirken eine nachteilige Emission größerer Mengen von Rauchen und Gasen (u.a.Ozon) und sind ferner aufgrund ihrer Empfindlichkeit gegen Windeinwirkung ungünstig.

Zur Vermeidung dieser Nachteile sind deshalb Bestrebungen bekannt geworden, die von der Stahlschweißung bekannten Vorteile des Unterpulverschweißens, wie hohe Abschmelzleistung, tiefer Einbrand, Baustelleneignung durch Unempfindlichkeit gegen Windeinwirkung und Umweltfreundlichkeit durch fehlende Licht-, Strahlungs-, Geräusch- sowie Rauch- und Gasemission, auch beim Schweißen von Aluminium zu nutzen.

Bisher bekanntgewordene Verfahren zum Unterpulverschweißen von Aluminiumwerkstoffen arbeiten mit dem sogenannten halboffenen Lichtbogen / 1-3, 5 /, was zu unzumutbaren Umweltbelastungen durch zum Teil giftige Rauche und Gase führt.

Ferner sind dabei Schweißpulverzusammensetzungen bekannt geworden (1-5), die jedoch wegen der chemischen Zusammensetzung der verwendeten Schweißpulver nur zum Schweißen von Reinaluminium geeignet sind. Diese Pulver ergeben nur unzureichende Festigkeiten und Zähigkeiten beim Verbinden magnesiumhaltiger Aluminiumlegierungen.

Ein bisher bekanntgewordenes Schweißpulver dieser Art (3) hat die Zusammensetzung

$$50 \% \quad KCl$$
$$15 \% \quad NaCl$$
$$35 \% \quad Na_3AlF_6$$

Mit diesem Schweißpulver können an Reinaluminium trotz einer gewissen Porigkeit die geforderten Mindestwerte für Festigkeit und Zähigkeit erreicht werden, wobei jedoch eine starke Schadstoffemission in Kauf genommen werden muß. Bei den höherfesten magnesiumhaltigen Aluminiumlegierungen werden diese Mindestwerte nicht erreicht, was auf den hohen Natriumgehalt des Schweißpulvers zurückgeführt wird. Die beispielsweise an der Legierung AlMg 4,5 Mn erreichte Zugfestigkeit liegt zwischen 145 und 185 N/mm$^2$ (gefordert:

275 N/mm²) und der an Faltproben erreichte Biegewinkel bei 3 bis 18°. Die anderen veröffentlichten Pulverzusammensetzungen (1, 2-5) zeigen nur geringfügige Abweichungen gegenüber obiger und weisen deshalb die gleichen Mängel auf.

Eine weitere Schwierigkeit, die beim Schweißen von Aluminiumwerkstoffen auftritt, ist die Stromkontaktierung der abschmelzenden Drahtelektrode. Bei Verwendung üblicher Kontaktdüsen aus Kupfer, deren Bohrung an den jeweiligen Drahtelektrodendurchmesser angepaßt ist, wird der Kontakt durch den Oxidfilm des Drahtes und ferner beim MIG-Schweißen durch den Niederschlag der Schweißrauche bzw. beim UP-Schweißen durch Eindringen von Pulverbestandteilen erschwert. Da die Bohrung eine gewisse Länge und einen gegenüber der Drahtelektrode etwas größeren Durchmesser hat, wandert der Kontaktpunkt stochastisch über die Länge der Kontaktdüse und verursacht so Änderungen der freien Drahtlänge, die wiederum zu Stromschwankungen und damit zu Prozeßunruhen führen können.

Aufgabe der Erfindung ist es, die obengenannten Nachteile zu vermeiden und ein Schweißverfahren zum Verbinden von Aluminiumwerkstoffen in horizontaler Schweißposition, ohne Vorwärmung, mit hoher Wirtschaftlichkeit und geringer Umweltbelastung sowie guter Festigkeit und Zähigkeit der Schweißverbindung zu schaffen, bei dem der Lichtbogen - wie beim Unterpulverschweißen von Stahlblechen - verdeckt von einer Pulverschicht in einer geschlossenen Kaverne brennt.

Diese Aufgabe wird erfindungsgemäß gelöst durch die Verwendung eines Schweißpulvers beim Unterpulverschweißen von Aluminiumwerkstoffen, welches eine Pulverzusammensetzung von 20-70% Kaliumchlorid (KCl), 20-70% eines Erdalkaliclorids, vorzugsweise Calcium- und/oder Magnesiumclorid (CaCl₂ und/oder Mg Cl₂), 1-20% Calciumfluorid (CaF$_2$) und vorzugsweise

1-15% einer *gasabspaltenden Substanz, wie z.B. Karbonat, wie Kaliumkarbonat ($K_2CO_3$) oder Calciumkarbonat ($CaCO_3$) ** hat. Bevorzugt kann das Schweißpulver ferner einen Zusatz von 1 bis 15 % Perlit enthalten.

Die gewünschte Größe und Festigkeit der Körner kann sowohl durch Bindung der Pulverbestandteile an den Füllstoff Perlit als auch durch Agglomerieren mit einem mineralischen Binde- mittel, wie z.B. Kaliumwasserglas, erreicht werden. Als besonders vorteilhaft in bezug auf die erreichten Gütewerte der Schweißnaht eignet sich für die Aluminiumlegierung AlMg 4,5 Mn ein Schweißpulver, das aus 45,2 % KCl, 40,4 % $CaCl_2$, 4,8 % $CaF_2$, 5,7 % Perlit und 3,8 % $K_2CO_3$ zusammengesetzt ist. Dabei kann das Fluorid und/oder das Karbonat auch in der Füllung einer abschmelzenden Röhrchen- oder Falzdrahtelektrode enthalten sein, wodurch eine feine Dosierung in Abhängigkeit der Schweißparameter möglich wird.

Bevorzugt ist das erfindungsgemäße Schweißpulver zum Unterpulverschweißen von Aluminium geeignet. Es können selbstverständlich aber auch andere Leichtmetalle, wie Magnesium und Magnesiumlegierungen, vorteilhaft damit verschweißt werden.

Zur Verbesserung der Ausbildung der Schweißnahtoberfläche und der Einbrandform sowie zur Kornverfeinerung des Schweißgutes sieht die Erfindung ferner vor, daß beim Schweißen der Lichtbogen quer zur Schweißrichtung elektromagnetisch gependelt wird. Dies ist beim UP-Schweißen von Stahl nicht mit Erfolg durchführbar, da sowohl die ferromagnetischen Eigenschaften dieses Werkstoffes als auch die physikalischen Eigenschaften der Schweißschlacke die Auslenkung von Lichtbogen und Kaverne erschweren. Beim UP-Schweißen von Aluminium und seinen Legierungen mit einem erfindungsgemäßen Schweißpulver ist dagegen wegen der günstigen Grundwerkstoff- und Schweißpulvereigenschaften eine deutliche Verbesserung der Schweißnahtausbildung zu erreichen.

*) schmelzpunkterniedrigenden und/oder
**) oder Alkali Oxyd, wie Kaliumoxyd ($K_2O$)

In der nachfolgenden Beschreibung wird das erfindungsgemäße Verfahren anhand einer Vorrichtung zur Durchführung
des Verfahrens und unter Bezugnahme auf die Zeichnungen
näher erläutert. In den Zeichnungen veranschaulicht

       Fig. 1 - eine Einrichtung zum UP-Schweißen
       Fig. 2 - eine vergrößerte Darstellung eines
                Stromkontaktstückes.

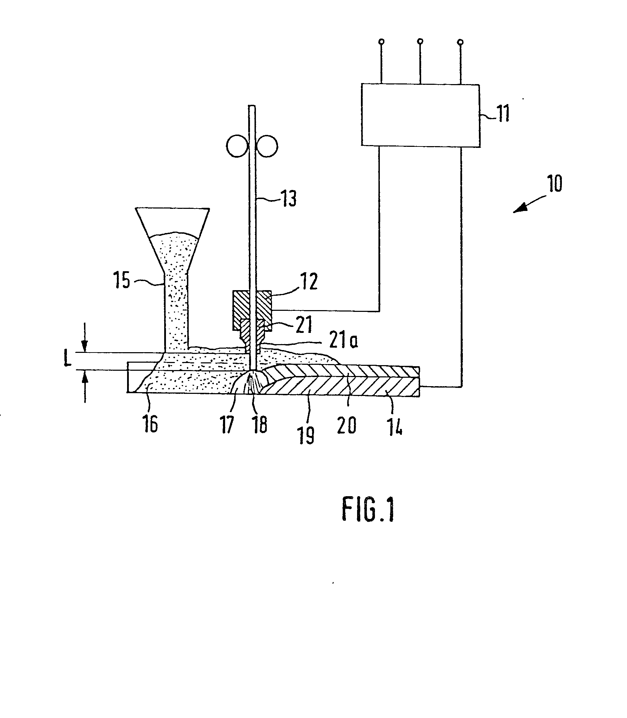

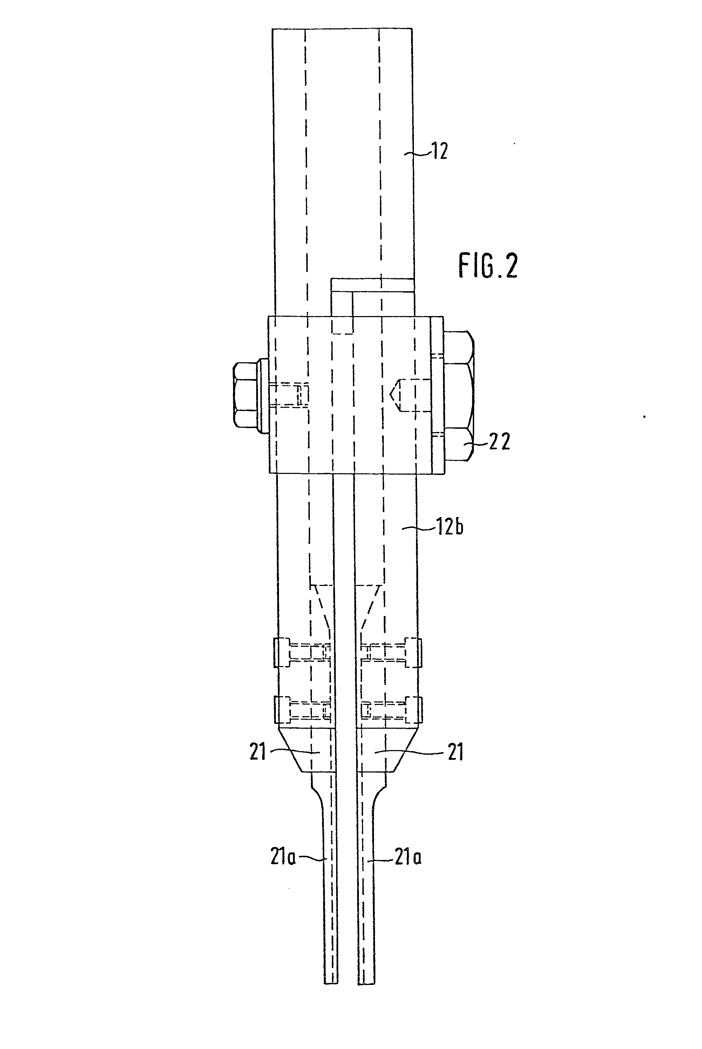

In der Figur 1 ist eine Einrichtung zum UP-Schweißen schematisch dargestellt und in ihrer Gesamtheit mit 10 bezeichnet. Die Einrichtung 10 weist eine Schweißgleichstromquelle
11 auf, die über ein Kontaktstück 12 aus Kupfer oder Messing
mit einer Drahtelektrode 13 aus Aluminium und dem Werkstück
14 verbunden ist. Die Schweißpulverzuführeinrichtung ist
mit 15, das aufgeschüttete erfindungsgemäße Pulver mit 16,
der unter dem Pulver in einer Kaverne 17 brennende Lichtbogen mit 18, die fertige Schweiß - lage mit 19 sowie die
sich bildende Schlacke mit 20 bezeichnet. Entsprechend
Fig. 2 erfolgt die Stromübertragung über Backen 21, die in
das Kontaktstück 12 eingeschraubt und entsprechend dem
Drahtdurchmesser genutet sind. Der Anpreßdruck dieser Backen
ist über eine Stellschraube 22, die auf das bewegliche Kontaktstückteil 12 b wirkt, auf einen konstant bleibenden Wert
einstellbar.
Um ein Festsetzen/Festklemmen der Drahtelektrode zwischen
den Backen 21 zu verhindern, sind diese im Hinblick auf
den günstigen Reibwert Stahl ./. Aluminiumelektrode aus Stahl
gefertigt.
Um eine kleine freie Drahtlänge L (s. Fig. 1) zu erreichen,
und zwar ohne daß durch die in das Pulver eintauchenden
Backen 21 eine Verdrängung des Pulvers entsteht, sind die
Kontaktbacken 21 im Bereich 21a bevorzugt in Lichtbogenrichtung verlängert und verjüngt ausgebildet. Mit einer Einrichtung nach den Fig. 1 und 2 wurden zwei 20 mm dicke AlMg 4,5Mn-

Bleche ohne Vorwärmung mit einer 3,2 mm dicken Drahtelektrode aus S-AlMg 4,5 Mn im I-Stoß in Lage und Gegenlage verbunden, wobei das Schweißpulver erfindungsgemäß aus 45,2 % $KCl$, 40,4 % $CaCl_2$, 4,8 % $CaF_2$, 5,7 % Perlit und 3,8 % $K_2CO_3$ bestanden hat. Der Schweißgleichstrom betrug 400 A, die Schweißspannung 30 V und die Schweißgeschwindigkeit 45 cm/min.

Dabei bildete sich eine geschlossene Kaverne aus. Eine Emission von größeren Rauch- und Gasmengen oder von Strahlung konnte nicht festgestellt werden. Die geforderten Festigkeits- und Zähigkeitswerte wurden erreicht. Dies verdeutlicht die besondere Eignung des erfindungsgemäßen Pulvers für das Unterpulverschweißen der Legierung AlMg 4,5 Mn.

Die Erfindung ist bevorzugt für das UP-Schweißen geeignet. Im Rahmen der Erfindung ist es aber auch vorteilhaft möglich, Fülldrähte mit dem erfindungsgemäßen Schweißpulver zu füllen und zum Schutzgasschweißen einzusetzen. Diese können sowohl als Drahtelektroden bei der MIG-Schweißung, als auch als stromloser Zusatzwerkstoff beim WIG-Schweißen verwendet werden, wobei dadurch insbesondere das Wiederzünden des WIG-Lichtbogens bei der Wechselstromschweißung verbessert wird. Ist beim WIG-Schweißen eine zusätzliche Abschmelzleistung aus Gründen der angestrebten Schweißnahtüberhöhung oder anderen Gründen nicht erwünscht, so können die erfindungsgemäßen Schweißpulverkomponenten auch mittels eines Pulverfördergerätes in den Lichtbogen gefördert werden.

Ffm., den 22. August 1979
Be/Ack
MG 1196

In Betracht gezogene Druckschriften

/ 1 /     Vana, J.: Das automatische Schweißen von Aluminium
          großer Stärken
          Zvaranie XI 11 (1962), S. 301/305

/ 2 /     Maushake, W.: UP-Aluminiumschweißung
          ZIS-Mitteilungen 7 (1965), H. 6, S. 826/37

/ 3 /     Killing, R,, M. Puschner: Vollmechanisiertes Schweißen
          großer Querschnitte aus Aluminiumlegierungen
          Schweißen u. Schneiden 23 (1971), H. 6, S. 223/27

/ 4 /     Bagryanskij, K.V. u.a.: The automatic submerged arc
          welding of aluminium flanges using a hidden arc
          Welding Prod. (1974), H. 7, S. 49/49

/ 5 /     Bagryanskij, K.V. u.a.: Influence of the cryolithe
          modulus on the properties of flux for the submerged
          arc welding of aluminium Welding Prod. (1972), H. 2,
          S. 10/12

Ansprüche:

1. Verfahren zum Unterpulverschweißen von Leichtmetallen wie Aluminium und Aluminium-Legierungen, insbesondere von Aluminium-Magnesium-Legierungen, gekennzeichnet durch eine Schweißpulverzusammensetzung von 20 bis 70 % Kaliumchlorid (KCl), 20 bis 70 % eines Erdalkalichlorids und 1 bis 20 % Calciumfluorid ($CaF_2$).

2. Schweißpulver nach Anspruch 1, dadurch gekennzeichnet, daß das Erdalkalichlorid vorzugsweise Calciumchlorid ($CaCl_2$) und/oder Magnesiumchlorid ($MgCl_2$) ist.

3. Schweißpulver nach Anspruch 1 oder 2, gekennzeichnet durch einen Zusatz von 1 bis 15 % einer *) gasabspaltenden Substanz, vorzugsweise von Karbonat wie Kaliumkarbonat ($K_2CO_3$) oder Calciumkarbonat ($CaCO_3$) oder Alkalioxyd wie Kaliumoxyd ($K_2O$).

4. Schweißpulver nach einem der Ansprüche 1 bis 3, gekennzeichnet durch einen Zusatz von 1 bis 20 % des leichten Füllstoffes Perlit.

5. Verfahren nach einem der Ansprüche 1 bis 4, dadurch gekennzeichnet, daß der Lichtbogen quer zur Schweißrichtung elektromagnetisch gependelt wird.

6. Verfahren nach einem der Ansprüche 1 bis 5, dadurch gekennzeichnet, daß zur Schweißstromübertragung ein Kontaktstück aus Kupfer mit verstellbaren Kontaktelementen aus Stahl verwendet wird.

Ffm., 22. August 1979
Be/Ack

*) schmelzpunkterniedrigenden und/oder

FIG.1

FIG.2

## Europäisches Patentamt

# EUROPÄISCHER RECHERCHENBERICHT

## EINSCHLÄGIGE DOKUMENTE

| Kategorie | Kennzeichnung des Dokuments mit Angabe soweit erforderlich der maßgeblichen Teile | betrifft Anspruch |
|---|---|---|
| | US - A - 3 186 881 (F.E. ROBBINS)  * Ansprüche 1,3 *  -- | 1,2 |
| | US - A - 3 294 526 (R.D. KOEP-LINGER)  * Spalte 2, Zeilen 33-56 *  -- | 1,2 |
| | BE - A - 506 620 (J.L. SARAZIN et al.)  * Das ganze Dokument *  -- | 1,2 |
| | SCHWEISSEN UND SCHNEIDEN, 27. Jahrgang, Heft 10, Oktober 1975, Düsseldorf, DE, F. EICHHORN et al.: "Elektro-schlackeschweissen von 45 mm dicken Blechen aus AlMg4,5Mn", Seiten 389-394  * Seite 391, rechte Spalte *  -- | 1,5,6 |
| | WELDING JOURNAL, 38. Jahrgang, Januar 1959, Miami, US, "Submerged-Arc welding of aluminum" Seite 8  * Rechte Spalte *  -- | 1 |
| | FR - A - 2 229 496 (MESSER GRIESHEIM)  * Anspruch 1 *  -- | 1,4 |

./.

Der vorliegende Recherchenbericht wurde für alle Patentansprüche erstellt

| Recherchenort | Abschlußdatum der Recherche | Prüfer |
|---|---|---|
| Den Haag | 04-12-1980 | MOLLET |

**KLASSIFIKATION DER ANMELDUNG (Int Cl )**

B 23 K 35/36
9/18

**RECHERCHIERTE SACHGEBIETE (Int Cl )**

B 23 K 35/36

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| AD | SCHWEISSEN UND SCHNEIDEN, 23. Jahrgang, Heft 6, 1971, Düsseldorf, DE, R. KILLING et al.: "Vollmechanisiertes Schweissen grosser Querschnitte aus Aluminium und Aluminiumlegierungen", Seiten 223-227 | |

----

KLASSIFIKATION DER ANMELDUNG (Int. Cl.³)

RECHERCHIERTE SACHGEBIETE (Int. Cl.³)